# EUROPEAN PATENT SPECIFICATION

(11) **EP 2 533 173 B1**
(45) Date of publication and mention of the grant of the patent: **02.04.2014**
(21) Application number: 12171018.0
(22) Date of filing: 06.06.2012
(51) Int. Cl.: G06K 7/00, G01S 13/75, G01S 13/82, G01S 13/84

(54) **Method for determining the location of a moving RFID tag**
Verfahren zur Ortsbestimmung eines sich bewegenden RFID Tags
Procédé pour localiser un transpondeur RFID en mouvement

(30) Priority: 07.06.2011 IT MI20111017
(43) Date of publication of application: 12.12.2012
(73) Proprietor: Universita' Degli Studi di Pisa, 56126 Pisa (IT)
(72) Inventor: Nepa, Paolo, 56122 Pisa (IT); Lombardini, Fabrizio, 56122 Pisa (IT); Buffi, Alice, 56122 Pisa (IT)
(74) Representative: Lunati & Mazzoni S.r.L.

(56) References cited:
- WO-A1-2006/099148

## Description

The present invention relates to a method of locating an emitter element of an electromagnetic signal, in particular an RFID tag, of the type pointed out in the preamble of the first claim. A similar method is described in patent application WO-A-2006/099148.

Presently known are different devices communicating through electromagnetic waves for identification and locating, and in particular the so-called RFID tags.

The name derives from the English acronym Radio-Frequency IDentification and said RFID tags consist of electronic devices combined with objects of various type. In particular, the RFID tags include a digital memory or similar means comprising information about the object they mark or other different information.

Said RFID tags further include an antenna adapted to communicate the information contained in said memory through electromagnetic signals.

This information is preferably communicated when the RFID tag is urged by a specific electromagnetic signal. Therefore, suitable reader devices are present which are adapted to send a reading request signal to the RFID tag and receive, interpret and communicate, through display or the like, the RFID tag's response signal.

In addition, some RFID tags, referred to as passive, do not receive the energy from an inner battery but by the reading request signal itself, and respond through the known modulated backscattering mechanism. These passive RFID tags are therefore provided with a suitable antenna adapted to passively enable communication of the memory contents in response to the reading request signal of the reader device.

The last-mentioned passive RFID tags are commercially very successful exactly because they do not require any battery and therefore are very cheap, are of substantially unlimited duration and have very reduced sizes. They are present in a great number of objects of daily use, for instance they act as anti-theft devices in supermarkets, are used for automatic management of goods and parcels, management of accesses and the like.

There are also active or semi-passive RFID tags which are provided with batteries. The RFIDs in addition generally communicate at frequencies included between kHz and GHz frequencies, in particular the most used frequencies being: 125/134 kHz, 13.56 MHz, 433 MHz, 860/960 MHz, 2.4 GHz and higher.

Taking into account the great spreading of the RFID tags, processes have been developed for locating the same in warehouses, hospital or firm premises or along assembly or production lines, for example.

These processes are mainly based on the intensity of the signal received from the RFID reader device.

The known art mentioned above has some important drawbacks.

In fact, known locating methods are not sufficiently precise and accurate. In particular, the signal intensity can vary depending on the obstacles or other environmental factors.

The known art mentioned above therefore does not allow an accurate locating of the RFID tags or the like.

Other methods of locating an emitter element of an electromagnetic signal use very directive antennas or adjustable aerial antennas or antenna arrays for the RFID reader device.

Said methods however give rise to an important increase in the complexity of the reader device as compared with commercial devices.

Under this situation, the technical task underlying the present invention is to conceive a method of locating an emitter element of an electromagnetic signal, in particular of RFID tags, capable of substantially obviating the mentioned drawbacks, when the emitter element of an electromagnetic signal moves along a known trajectory and at known speed.

Within the scope of this technical task, it is an important aim of the invention to obtain a locating method of said elements carrying out accurate locating. Another important aim of the invention is to carry out a simple and cheap locating method.

The technical task and the aims specified are achieved by a method of locating an emitter element of an electromagnetic signal as claimed in the appended independent claims.

Preferred embodiments are highlighted in the dependent claim.

The features and advantages of the invention are hereinafter clarified by the detailed description of a preferred embodiment of the invention, with reference to the accompanying drawings, in which:

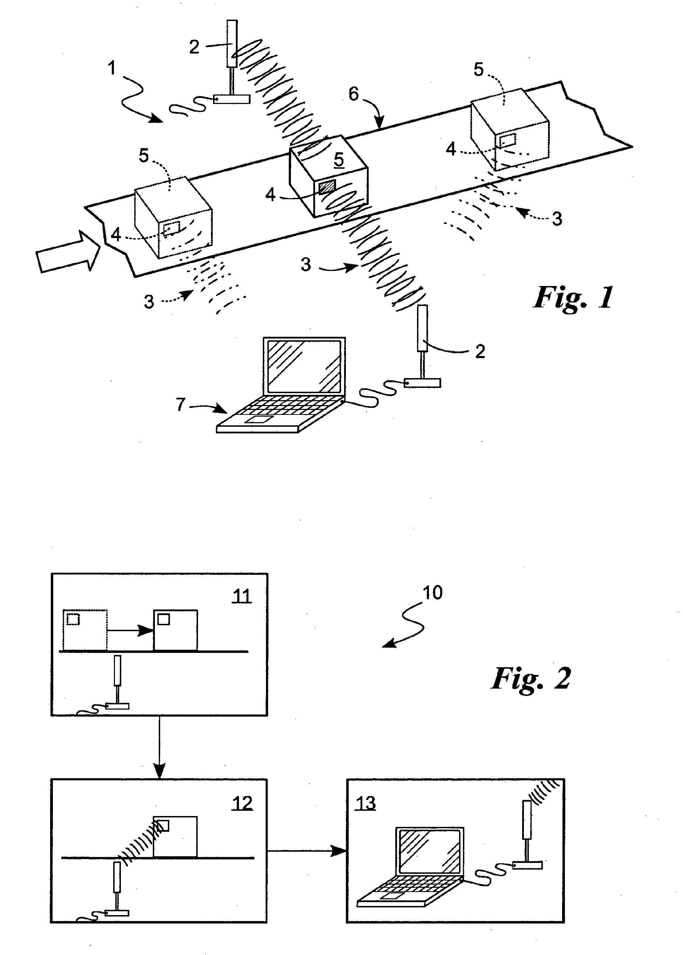

**Fig. 1** diagrammatically shows an apparatus for putting into practice the locating method according to the invention;
**Fig. 2** is a block diagram of the method of the invention;
**Fig. 3** shows a first graph concerning the invention;
**Fig. 4** shows a second graph concerning the invention;
**Fig. 5** highlights a third graph concerning the invention;
**Figs. 6a-6d** show further graphs concerning the invention;
**Fig. 7** highlights another graph concerning the invention.

With reference to the mentioned figures, the method of locating an emitter element of an electromagnetic signal according to the invention is generally identified by reference numeral **10.**

It enables at least one emitter element **4** of an electromagnetic signal **3** to be tracked through at least one reader device **2** of the electromagnetic signals 3. This locating further preferably takes place in a locating apparatus **1** hereinafter described.

The emitter element 4 comprises at least one antenna, an inner memory including at least identifier data. It is preferably an RFID tag, more suitably of the passive or semi-passive type as described in the known art. It is further preferably combined with, and therefore physically fastened, secured or connected to an object 5 of any type.

The emitter element 4 is adapted to generate an electromagnetic signal 3 made up, as known, of a carrier component and a modulating component. Signal 3 is further suitably modulated by numerical modulation. In particular, generation of the modulated electromagnetic signal 3 is obtained by a known modulated backscattering mechanism. Said electromagnetic signal 3 further has a carrier frequency preferably included between 100 MHz and 10 GHz, still more preferably within the ranges and values of 433 MHz, 860-960 MHz and 2.4/5.8 GHz. The electromagnetic signal 3 then contains the information present in the inner memory of element 4.

The reader device 2 is suitably an RFID tag reader, known by itself.

It is adapted to read at least the electromagnetic signal 3, demodulate the signal and preferably draw information therefrom such as: an identifier, the contents in the emitter element 4 memory, the coherent information signal of the electromagnetic signal 3 and in particular the demodulated components I and Q or the phase of the electromagnetic signal 3. Said coherent information signal and in particular the demodulated components I and Q or the phase of the electromagnetic signal 3 are time functions defined within the duration of a reading. The antenna of device 2 further preferably has an amplitude value of the half-power beam higher than one fourth of the straight angle and is able to carry out a given number of interrogations per second.

Preferably, several reader devices 2 are present so as to ensure readings at any position of the objects 5 and each reader device 2 has at least one antenna.

The locating apparatus 1 further comprises actuating means **6** adapted to set the emitter element 4 and reader device 2 in relative motion according to a known trajectory and speed. Said trajectory and speed can be of any shape and type and are not necessarily straight, provided they are known.

Suitably, this actuating means 6 consists of a conveying chain along which the objects 5 provided with emitter elements are moved. This conveying chain can be a conveyor belt of assembly lines, a luggage conveyor, a rotating platform or others.

Alternatively, the actuating means 6 is adapted to move the reader device 2 and for example consists of carriages, slides or the like. The last mentioned actuating means 6 is for example adapted to track a fixed object 5 provided with an emitter element 4, as it happens for example in case of objects aligned on a shelf.

The locating method **10** preferably put into practice with apparatus 1 develops as follows.

The method 10 comprises a relative movement **11** of the emitter element 4 and the reader device 2 according to a known trajectory and speed through the actuating means 6. "Known trajectory and speed" means that the user knows the speed and trajectory of movement 11 with good approximation and possibly can also adjust it.

The method 10 further comprises reading **12** of the electromagnetic signal 3 by the reader device 2, in a plurality of different relative positions of the emitter element 4 and the reader device 2. This reading 12 in said plurality of positions is obtained due to the ability of obtaining a plurality of readings, **N,** of the reader device 2, as previously mentioned, and the relative movement 11.

This reading 12 verifies at least the contents in the memory of the emitter element 4 and draws the coherent information signal of the electromagnetic signal 3 by which the demodulated components I and Q will be subsequently indicated or at least the phase of the electromagnetic signal 3.

The method 10 then comprises an analysis **13** of the coherent information signal of the electromagnetic signal 3 and in particular of the demodulated components I and Q or at least of the phase of the electromagnetic signal 3.

Said analysis aims at recognising the history of variations in the coherent information signal of the electromagnetic signal 3 from a plurality of readings, each corresponding to a different reading of the same signal emitter. Said variations in the coherent information signal of the electromagnetic signal 3, between one reading and the other, are mainly due to the variation in the relative distance between the reader device 2 and the emitter element 4, the identifier data being the same. In particular, said analysis can recognise the history, or also the curve, of variations in the coherent information signal of the electromagnetic signal 3 between an r-th reference reading, in particular the first one (index r=1) and the i-th readings with index 1<i<N (possibly with i different from r). Advantageously, said variations in the coherent information signal are variations in the phase displacement represented by the rotation in the complex plane I-Q of the demodulated components I and Q of the electromagnetic signal 3 at a reading, relative to said components of the electromagnetic signal at another reading.

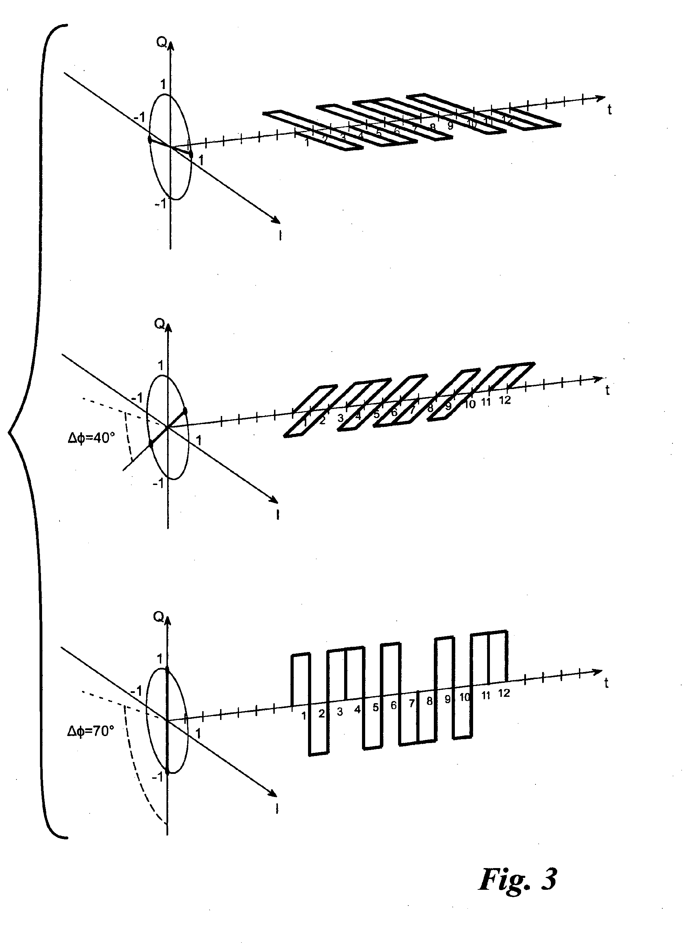

By way of example, diagrammatically shown in Fig. 3 are three possible demodulated components I and Q in the complex plane, in particular for an identifier of 12 bits, a binary-phase numerical modulation and for N=3 different readings associated with as many different relative distances. Also reproduced in Fig. 3 are the phase displacements associated with each reading, when the first reading has been selected as the reference (index r equal to 1).

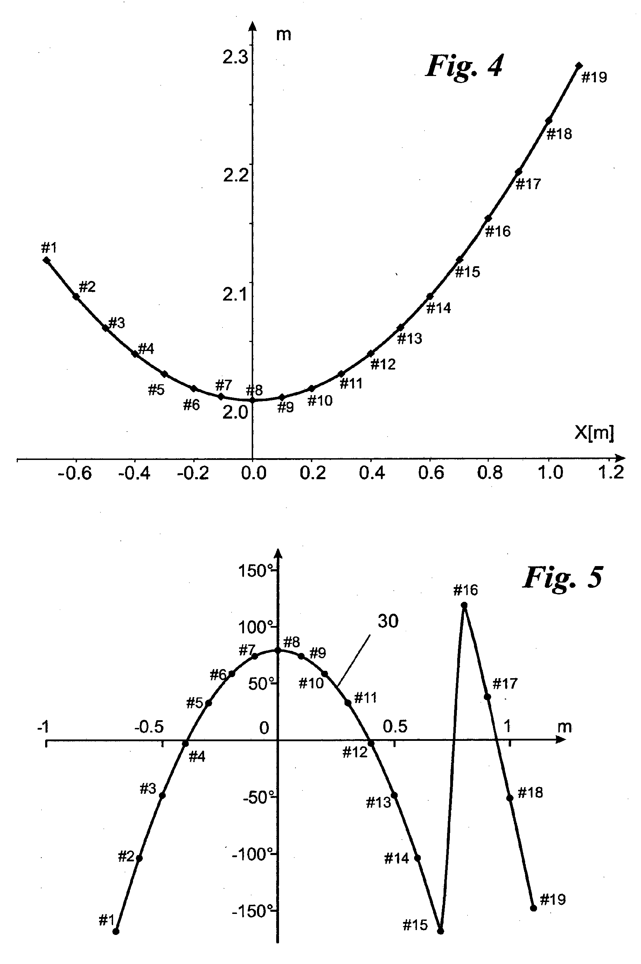

Shown in Fig. 4 is a possible course of the relative distance (in the y axis) between the emitter element 4 and the reader device 2, in metres, upon variation of the space coordinate x (in the x axis) along the trajectory, for nineteen possible positions of the emitter element 4 associated with each said reading, in particular taking a straight trajectory and the coordinate x=0 in the minimum-distance position from the reader device 2.

Said course of the relative distance corresponds to a history or also a curve, of the variations in the phase displacement expressed in degrees, given the wave length of the electromagnetic signal 3.

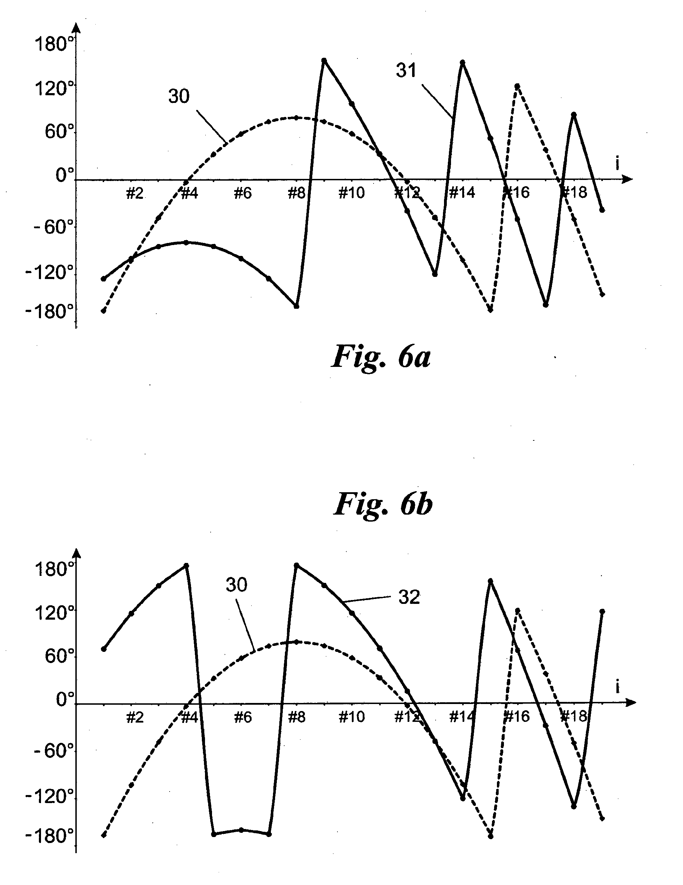

In addition, during the analysis 13 it is obtained an observed history **30** (Fig. 5) of variations in the coherent information signal of the electromagnetic signal 3 and a series of nominal histories **31, 32, 33** and **34** (Figs. 6a-6d) of variations in the coherent information signal of the electromagnetic signal 3.

The observed history 30 of variations in the coherent information signal of the electromagnetic signal 3 is made up of the series of subsequent measurements obtained from the coherent information signal of the electromagnetic signal 3 of the reading 12 in said plurality of different relative positions of the emitter element 4 and the reader device 2. Said observed history depends on the position x₀ of the emitter element 4 along the trajectory at the instant corresponding to the reading selected as the reference, in particular the first one.

The series of nominal histories 31-34 of variations in the coherent information signal of the electromagnetic signal 3 is obtained a *priori* and is made up of the theoretical values at least of the phase of the electromagnetic signal as a function of the overall propagation delay (i.e. going and return), calculated from the relative position of the emitter element 2 and the reader device 4. In particular, said values can be purged of a phase constant term. Each nominal history of said series substantially corresponds to the theoretical values of variations in the coherent information signal of the electromagnetic signal 3 for an assumed value x'₀ of said position x₀.

In particular, the nominal curves shown comprise nineteen readings in succession and for them the following values are assumed: for curve 31 a value x'₀ of said position x₀ equal to -0.3 m was assumed; for curve 32 a value x'₀ of said position x₀ equal to -0.5 m was assumed; for curve 33 a value x'₀ of said position x₀ equal to -0.65 m was assumed; for curve 34 a value x'₀ of said position x₀ equal to -0.8 m was assumed.

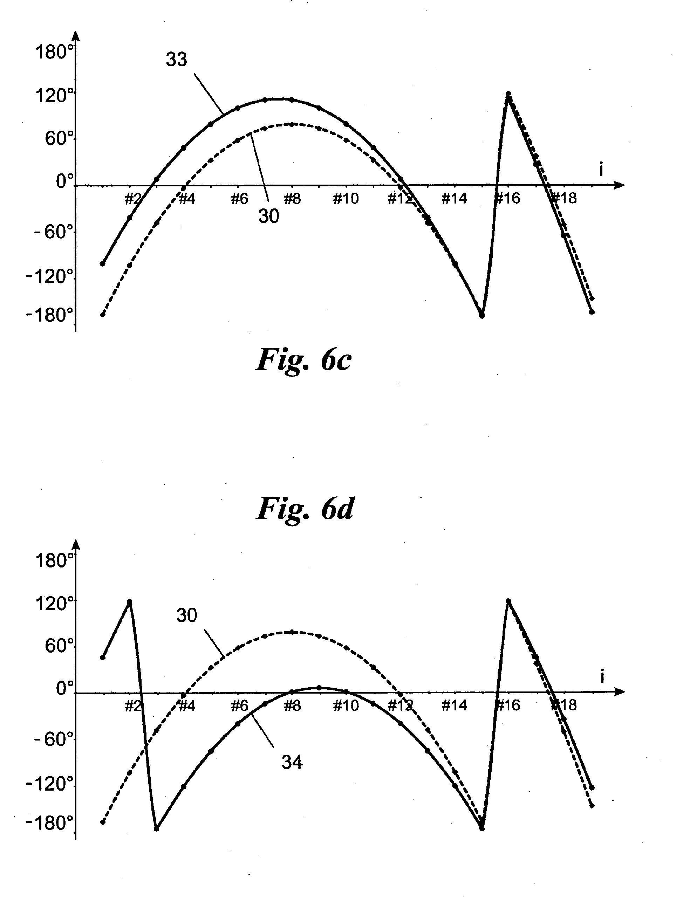

In addition, in the analysis 13, through recognition of the specific nominal history of said series that better approaches said observed history, the specific value x'₀ associated with said specific nominal history is assumed, as the estimate x"₀ of said position x₀. Advantageously, said recognition can be carried out on the variations in the phase displacement represented by the rotation in the complex plane I-Q of the demodulated components I and Q of the electromagnetic signal 3 at the i-th reading relative to said components of the electromagnetic signal at another r-th reading. Shown in Fig. 6 are the comparisons between the observed history 30 of the variations in the phase displacement, for which the measured value of x₀ is equal to -0.7 m, and the series of the four nominal histories 31-34. It is possible to immediately see that the best estimate x"₀ of said position x₀ corresponds to x"₀= .0.65 m.

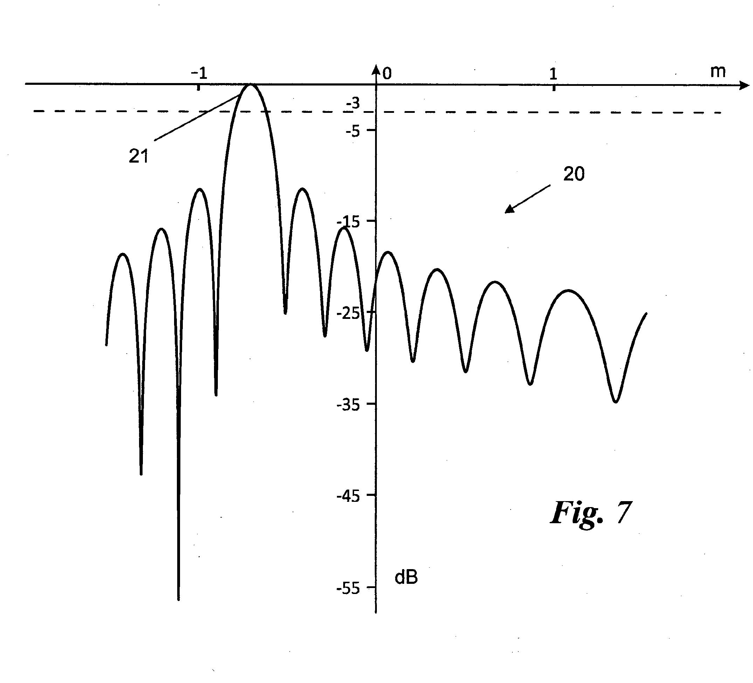

In the analysis 13, said recognition of the specific nominal history of said series that better approaches said observed history can be advantageously carried out by a correlation measurement between each nominal history of said series and said observed history, obtaining a correlation curve **20** (Fig. 7) upon variation of x'₀, comprising a maximum peak **21** identifying the estimate of the position of the emitter element 4 and then of object 5, x"_{0.}

In particular, said correlation measurement can be carried out on the variations in the phase displacement represented by the rotation in the complex plane I-Q of the demodulated components I and Q of the electromagnetic signal 3 at an i-th reading relative to said components of the electromagnetic signal at another r-th reading. Advantageously said correlation measurement can be carried out on the complex vector (phasor) having said phase displacement as the angle.

In the analysis 13 of method 10, said observed history of variations in the coherent information signal of the electromagnetic signal 3 is obtained from the series of measurements in succession obtained from the electromagnetic signal in a plurality of N readings of the same emitter element 4. In particular, each element of said observed history of variations in the coherent information signal of the electromagnetic signal 3 is obtained by a time correlation between the coherent information signal of the electromagnetic signal at an i-th reading, in particular the first one (index r equal to 1). Advantageously, said time correlation can be carried out between the demodulated components I and Q of the electromagnetic signal 3 at an i-th reading of said plurality relative to said components of the electromagnetic signal at an r-th reading, in particular the first one (r equal to 1). Advantageously, said analysis 13 of the coherent information signal can be carried out also using said time correlation between measurements of the coherent information signal of readings with additional combinations of indices i and r, in particular using the estimated full correlation matrix (i=1,2,...N and r=1,2,...N).

In particular, said analysis 13 using said estimated full correlation matrix can be carried out using beamforming or array processing methods with observed multiples, said observed multiples being available within the duration of a reading for each reading. Advantageously, said beamforming or array processing method can be at very high resolution.

In particular said beamforming or array processing methods with observed multiples can operate in an equivalent manner directly on the coherent information signal for each said observed multiple, obtaining a result of said analysis 13 relating to each said observed multiple, and subsequently carrying out a combination thereof, in particular incoherent (in square module).

Advantageously, said coherent information signal can be processed for recognition of said history of variations in the coherent information signal after pre-processing for bringing the relative emitter-reader geometry back to equivalent remote-field conditions.

Advantageously, said history of variations in the coherent information signal or said history of variations in the coherent information signal after said pre-processing can be calculated in an approximate manner, in particular using a square or linear approximation.

Advantageously, for increasing precision and accuracy of locating, recognition of the specific nominal history of variations in the coherent information signal that better approaches said observed history of variations in the coherent information signal can be obtained, as well as upon variation of the position parameter x'₀, also upon variation of at least one offset parameter in the transverse direction relative to the nominal trajectory, for example a distance and/or height offset.

The method 10 is preferably carried out continuously and on all objects 5 provided with emitter element 4 readable by at least one reader device 2.

Advantageously, the coherent information signal on which said analysis 13 is carried out can be purged of unmodulated backscattering components originated from fixed or moving obstacles, in particular through filtering operations. Said filtering can be carried out through the estimate of the mean value of the coherent information signal at each said reading and subtraction of said estimate from said corresponding coherent information signal.

In order to cover a wide space, the locating apparatus 1 may comprise a plurality of reader devices 2 and a computer **7,** adapted to carry out the described analyses for a plurality of elements 4 and connected to one or more reader devices 2.

The method 10 is preferably carried out and supported by software readable from computer.

The implemented software preferably indicates on the display, the objects 5 for example present on a conveyor chain or belt conveyor and read by device 2. The elements 4 in fact include identification data correlated with the object 5 in the memory.

In addition the software preferably allows a user to select an object 5 of which he/she wishes to know the position. The software therefore accurately calculates the position of same.

Said position of said selected object 5 can be preferably indicated by an optical pointer, a sound indicator or the like, or as additional information on an image taken by a camera. Said position of a plurality of emitters can be compared in an automatic manner with an orderly list of a plurality of objects 5.

The invention enables important advantages.

In fact, the method according to the invention allows accurate locating of objects 5.

This method has many applications and advantages, on assembly lines, conveyor belts in airports and the like, but also in warehouses and others, as the RFID tags are widespread. Another important advantage of the locating method consists in that the same is very simple and cheap.

In fact, the reader devices 2 available on the market generally already have all required features, as well as elements 4. Therefore it is substantially only necessary to market the related software.

Another important advantage of the locating method consists in that it is particularly strong in terms of trouble, such as thermal noise, multiple paths of the electromagnetic signal 3 connected to reflections from objects close to the emitter element 4 and the reader device 2. In fact, advantageously, said analysis 13 is carried out on different measurements in succession of the signal that, for each emitter element 4, always communicates the same memory contents.

The invention is susceptible of variations falling within the scope of the inventive idea. All of the details can be replaced by equivalent elements and the materials, shapes and sizes can be of any nature and magnitude.

## Claims

1. A method (10) of locating at least one emitter element (4) emitting an electromagnetic signal (3) by means of at least one reader device (2) receiving said electromagnetic signal (3), wherein said electromagnetic signal (3) is modulated according to a numerical modulation and wherein said analysis is carried out through analysis of the coherent information signal comprising the demodulated components I and Q, said method (10) being **characterised in that** it comprises: relative movement (11) of said at least one emitter element (4) and said at least one reader device (2) according to known trajectory and speed, reading (12) of said electromagnetic signal (3) at a plurality of different relative positions of said at least one emitter element (4) and said at least one reader device (2), at least analysis (13) of the phase of said electromagnetic signal (3), and **in that** said analysis (13) is obtained by means of an observed history of variations of the coherent information signal (30), given by a series of successive measurements, each measurement being obtained from said electromagnetic signal (3) in one of a plurality of different relative positions of said emitter element (4) and said reader device (2), and processing a series of nominal histories of variations of the coherent information signal (31-34) made up of the theoretical values at least of the phase of said measurements as a function of the relative position of said emitter element (4) and said reader device (2), and comparing said observed history (30) with said nominal histories (31-34) for the purpose of recognising the nominal history that better approaches the observed history.

2. A method as claimed in claim 1, wherein each of the measurements obtained from the coherent information signal of the electromagnetic signal (3) of the reading (12) in said plurality of different relative positions of the emitter element (4) and the reader device (2), is obtained by a time correlation between the coherent information signal of the electromagnetic signal (3) at one reading and the coherent information signal of the electromagnetic signal (3) at one reading selected as the reference.

3. A method as claimed in one or more of the preceding claims, wherein said analysis (13) is carried out using array processing methods.

4. A method as claimed in one or more of the preceding claims, wherein said coherent information signal on which said analysis (13) is carried out is purged of unmodulated backscattering components originated from fixed or moving obstacles through filtering operations.

5. A method as claimed in one or more of the preceding claims, wherein the analysis (13) is carried out using readings acquired from at least one reader device (2) sequentially using several antennas.

## Patentansprüche

1. Verfahren (10) zur Ortsbestimmung mindestens eines Senderelements (4), das ein elektromagnetisches Signal (3) anhand mindestens eines Lesegeräts (2) aussendet, das das genannte elektromagnetische Signal (3) erhält, bei dem das genannte elektromagnetische Signal (3) nach einer numerischen Modulierung moduliert wird und bei dem die genannte Analyse anhand der Analyse des kohärenten Informationssignals erfolgt, das die demodulierten Komponenten I und Q umfasst, wobei dieses Verfahren **dadurch gekennzeichnet ist, dass** es Folgendes umfasst: eine relative Bewegung (11) des genannten mindestens einen Senderelements (4) und des genannten mindestens einen Lesegeräts (2) entlang einer bekannten Bahn und mit einer bekannten Geschwindigkeit, eine Ablesung (12) des genannten elektromagnetischen Signals (3) in einer Vielzahl unterschiedlicher relativer Positionen des genannten mindestens einen Senderelements (4) und des genannten mindestens einen Lesegeräts (2), eine Analyse (13) mindestens der Phase des genannten elektromagnetischen Signals (3) und dadurch, dass die genannte Analyse (13) anhand einer beobachteten Geschichte von Schwankungen des kohärenten Informationssignals (30) erzielt wird, die sich aus einer Reihe von aufeinander folgenden Messungen ergibt, wobei jede Messung von dem genannten elektromagnetischen Signal (3) in einer Vielzahl unterschiedlicher relativer Positionen des genannten Senderelements (4) und des genannten Lesegeräts (2) erhalten wird und durch Bearbeitung einer Reihe von Nenngeschichten von Schwankungen des kohärenten Informationssignals (31-34), die aus den theoretischen Werten mindestens der Phase der genannten Messungen abhängig von der relativen Position des genannten Senderelements (4) und des genannten Lesegeräts (2) bestehen, und durch Vergleich der genannten beobachteten Geschichte (30) mit den genannten Nenngeschichten (31-34) zu dem Zweck, die Nenngeschichte festzustellen, die sich der beobachteten Geschichte am meisten annähert.

2. Verfahren nach einem oder mehreren der vorangegangenen Ansprüche, bei dem jede der genannten, durch das kohärente Informationssignal des elektromagnetischen Signals (3) der Lesung (12) in der genannten Vielzahl unterschiedlicher relativer Positionen des Senderelements (4) und des Lesegeräts (2) erhaltenen Messungen mittels einer zeitlichen Korrelation zwischen kohärentem Informationssignal des elektromagnetischen Signals (3) bei einer Lesung und dem kohärenten Informationssignal des elektromagnetischen Signals (3) bei einer als Bezug gewählten Lesung erzielt wird.

3. Verfahren nach einem oder mehreren der vorangegangenen Ansprüche, bei dem die genannte Analyse (13) unter Einsatz von Array Processing-Verfahren erfolgt.

4. Verfahren nach einem oder mehreren der vorangegangenen Ansprüche, bei dem das genannten kohärente Informationssignal, auf dem die genannte Analyse (13) erfolgt, von nicht modulierten, von festen oder beweglichen Hindernissen stammenden Rückstreuungskomponenten durch Filtervorgänge bereinigt wird.

5. Verfahren nach einem oder mehreren der vorangegangenen Ansprüche, bei dem die Analyse (13) unter Verwendung von Lesungen erfolgt, die von mindestens einem Lesegerät (2), das mehrere Antennen in Folge verwendet, erfasst werden.

## Revendications

1. Procédé (10) pour localiser au moins un élément émetteur (4) qui émet un signal électromagnétique (3) au moyen d'un dispositif lecteur (2) qui reçoit ledit signal électromagnétique (3), dans lequel ledit signal électromagnétique (3) est modulé selon une modulation numérique et dans lequel ladite analyse est réalisée à travers l'analyse du signal d'information cohérent comprenant les composantes démodulées I et Q, ledit procédé étant **caractérisé en ce qu'**il comprend : un déplacement relatif (11) dudit au moins un élément émetteur (4) et dudit au moins un dispositif lecteur (2) selon une trajectoire et une vitesse connues, une lecture (12) dudit signal électromagnétique (3) dans une pluralité de différentes positions relatives dudit au moins un élément émetteur (4) et dudit au moins un dispositif lecteur (2), une analyse (13) au moins de la phase dudit signal électromagnétique (3) et **en ce que** ladite analyse (13) est obtenue au moyen d'une histoire observée de variations du signal en formation cohérent (30), donnée par une série de mesures successives, chaque mesure étant obtenue dudit signal électromagnétique (3) dans une pluralité de positions relatives différentes dudit élément émetteur (4) et dudit dispositif lecteur (2) et en traitant une série d'histoires nominales de variations du signal d'information cohérent (31-34), composées des valeurs théoriques au moins de la phase desdites mesures en fonction de la position relative dudit élément émetteur (4) et dudit dispositif lecteur (2) et comparant ladite histoire observée (30) avec lesdites histoires nominales (31-34) dans le but d'identifier l'histoire nominale approchant le mieux l'histoire observée.

2. Procédé selon une ou plusieurs des revendications précédentes, dans lequel chacune desdites mesures obtenues du signal d'information cohérent du signal électromagnétique (3) de la lecture (12) dans ladite pluralité de différentes positions relatives de l'élément émetteur (4) et du dispositif lecteur (2) est obtenue au moyen d'une corrélation temporelle entre le signal d'information cohérent du signal électromagnétique (3) à une lecture et le signal d'information cohérent du signal électromagnétique (3) à une lecture choisie comme référence.

3. Procédé selon une ou plusieurs des revendications précédentes, dans lequel ladite analyse (13) est effectuée en utilisant des procédés de « array processing ».

4. Procédé selon une ou plusieurs des revendications précédentes, dans lequel ledit signal d'information cohérent sur lequel ladite analyse (13) est effectuée est épuré des composantes de rétrodiffusion non modulées engendrées par des obstacles fixes ou mobiles à travers des opérations de filtrage.

5. Procédé selon une ou plusieurs des revendications précédentes, dans lequel l'analyse (13) est effectuée en utilisant les lectures acquises par au moins un dispositif lecteur (2) utilisant plusieurs antennes en séquence.
